# EUROPÄISCHE PATENTSCHRIFT

(11) **EP 0 472 254 B1**
(45) Veröffentlichungstag und Bekanntmachung des Hinweises auf die Patenterteilung: **22.06.1994**
(21) Anmeldenummer: 91250232.5
(22) Anmeldetag: 21.08.1991
(51) Int. Cl.: H05B 7/06

(54) **Metallurgisches Gefäss mit metallischer Elektrode**
Metallurgical vessel with metal electrode
Récipient métallurgique avec électrode métallique

(30) Priorität: 23.08.1990 DE 4026897
(43) Veröffentlichungstag der Anmeldung: 26.02.1992
(73) Patentinhaber: MANNESMANN Aktiengesellschaft, 40027 Düsseldorf (DE)
(72) Erfinder: Hofmann, Werner, W-4130 Moers (DE); Feuerstacke, Ewald, W-4270 Dorsten (DE); Schüring, Andreas, W-4330 Mühlheim/Ruhr (DE)
(74) Vertreter: Presting, Hans-Joachim, Dipl.-Ing.

(56) Entgegenhaltungen:
- EP-A- 0 044 512
- EP-A- 0 169 100
- EP-A- 0 178 981
- EP-A- 0 203 301
- FR-A- 2 437 760
- GB-A- 2 184 527
- US-A- 4 947 405

## Beschreibung

Die Erfindung betrifft ein metallurgisches Gefäß, insbesondere ein Ofengefäß eines Gleichstromlichtbogenofens mit mindestens einer am Mantel des Gefäßbodens befestigten metallischen Elektrode, die einenends die Ofenwand durchdringend die im Gefäß befindliche Schmelze berührt und anderenends an elektrische kühlfluide Versorgungsquellen anschließbar ist.

Bei metallurgischen Gefäßen mit Bodenelektroden, beispielsweise Plasmaschmelzöfen oder Vakuumlichtbogenöfen, wird der elektrische Kontakt zur Schmelze über im Feuerfestfutter des Gefäßes eingelassene Elektroden hergestellt. Diese Elektroden unterliegen dabei insbesondere thermischem Verschleiß. Um diesen thermischen Verschleiß zu mindern, werden die metallischen Elektroden gekühlt.

So ist aus der DE-PS 31 06 741 bekannt, als Kühlfluid Gase, insbesondere Luft, einzusetzen. Nachteil dieser Kühlart ist aber die nur geringe Möglichkeit der Wärmeabfuhr durch das Kühlmedium Luft.

Zur Erhöhung der Wärmeabfuhr kommen auch Flüssigkeiten als Kühlmittel infrage. So ist aus EP-PS 00 56 225 eine Elektrode bekannt, bei der in einem Hohlraum der stabförmigen Elektrode über ein Zuführrohr Kühlwasser unter Druck eingeleitet wird. Nachteil dieser Ausführungsform ist es aber, daß die Kühlwasserführung bis in das Ofengefäß hineinragt. Bei einer möglichen Überhitzung der Elektrode und einem möglichen Durchschmelzen des der Schmelze zugewandten Verschleißteils bzw. beim Auftreten von Rissen im vollmetallischen Teil bis hin zum wassergekühlten Elektrodenteil könnte das unter Druck stehende Kühlwasser unterhalb des schmelzflüssigen Bades in den Herd eindringen. Die Folge wäre eine Knallgasexplosion und die Gefährdung des Bedienungspersonals und eine Zerstörung des Ofens.

In der genannten Schrift wird in aufwendiger Weise zwischen Verschleißteil und dem Kühlteil der Bodenelektrode eine Metallschicht geringer thermischer Leitfähigkeit und niedrigem Schmelzpunkt vorgesehen. Eine Elektrode dieser Bauart behindert den Wärme- und Stromfluß und ist darüber hinaus nicht - auch nicht in Teilen - wiederverwendbar.

Aus der DE 38 35 785 ist eine Bodenelektrode für elektrische Schmelzöfen bekannt, bei der eine Kappe mit dem Verschleißteil lösbar verbunden ist. Die aus dieser Schrift bekannte Bodenelektrode weist nicht nur eine geringe Kühlleistung der Kappe auf, so daß noch weitere Kühleinrichtungen erforderlich sind. Darüber hinaus sind keinerlei Einrichtungen zum schnellen Wechseln der Elektrode vorgesehen.

Neben dem Nachteil der aufwendigen Wechselarbeit einer aus dieser Schrift bekannten Elektrode weist diese keine Maßnahmen auf zur Aufnahme von Schlägen oder Stößen mit der Folge der Lageänderung der Elektrode und der Gefahr eines Ofendurchbruchs. Beim Einsatz von Schrott können nämlich einzelne Schrottstücke auf die Stirnfläche des Verschleißteils der Bodenelektrode fallen und diese axial aus dem Gefäßboden herausdrücken.

Aufgabe der vorliegenden Erfindung ist es, die o. g. Nachteile zu vermeiden und ein metallurgisches Gefäß zu schaffen, das eine konstruktiv einfache, robuste und verschleißarme Bodenelektrode aufweist, die leicht wechselbar ist und in ihren wesentlichen Teilen wieder verwendet werden kann.

Die Aufgabe wird gelöst durch die Merkmale des Anspruchs 1.

Die erfindungsgemäße Elektrode ist daher konstruktiv und funktional aufgeteilt in ein Verschleiß- und ein Wiederverwendungsteil. Beide miteinander lösbar verbundenen Elektrodenteile werden von einer am Ofenmantel befestigten Halterung, an der die Medienanschlüsse angeordnet sind, gehalten. Der der Schmelze zugewandte Elektrodenteil ist das Verschleißteil und besteht aus einem einfachen metallischen Klotz, vorzugsweise aus einem der Schmelze entsprechenden Werkstoff. Der der Schmelze abgewandte Elektrodenteil besteht aus Kupfer und weist Kanäle zur Einbringung eines Kühlmittels auf. Ein Teil des Kupferteils ragt aus dem Ofen heraus. Gegen den Außenmantel dieses Kupferteils sind Kontaktbacken zur Einbringung des elektrischen Strom anpreßbar.

Das einfache und schnelle Wechseln der miteinander verbundenen Elektrodenteile erfolgt dadurch, daß die Klemmeinrichtung, die die Stromseile mittels der Kontaktbacken an den Kupferteilen der Elektrode anpreßt, gelöst wird. Dann kann die Elektrode von der Ofengefäßseite her aus der Halterung und aus dem Flansch herausgezogen werden. Die gesamte Medienversorgung, nämlich die Strom- und Kühlwasserversorgung, ist über das Halteelement am Ofenboden fixiert und kann beim Elektrodenwechsel in ihrer Lage verbleiben.

Diese Wechselmethode stellt eine erhebliche Vereinfachung für die Wartungsmannschaft dar, da sonst aufwendige Arbeiten unterhalb des Ofens notwendig wären, die nicht nur in räumlicher Enge, sondern darüber hinaus auch ohne Kran durchgeführt werden müßten.

Die ausgebaute Elektrode wird durch einfaches Lösen der Verbindung zwischen dem Kupfer- und dem Verschleißteil getrennt und ein neues Verschleißteil wird angebracht. Alle wesentlichen Teile können also bei einem Elektrodenwechsel wieder verwendet werden, es ist nur der vergleichsweise kostengünstige Verschleißteil zu ersetzen. Die neu zusammengesetzte Elektrode kann auf einfache Weise von der Gefäßinnenseite her in das Flanschrohr gesteckt werden und ist nach dem Schließen der Klemmvorrichtung wieder einsatzbereit.

Der Kupferteil der Elektrode ist hinsichtlich seiner Dimensionierung wärmetechnisch so ausgelegt, daß das mehrmalige Nacharbeiten der Kopffläche des Kupferkühlteils möglich ist, um einen guten Kontakt zwischen den beiden Stäben zu gewährleisten. Um Behinderungen im Wärmeübergang zwischen dem Verschleiß- und dem Kupfer-Elektrodenteil zu vermeiden, wird vorgeschlagen, beide Teile kraftschlüssig mittels Spannschrauben oder innig mittels Schweiß- bzw. Lötmittel miteinander zu verbinden. Die Elektrodenteile können dabei auch in der Weise miteinander verbunden werden, daß ein Lötmittel zwischen den Trennflächen eingebracht wird und darüber hinaus ein Aneinanderpressen über Spannschrauben durchgeführt wird.

Eine besonders robuste Bauweise der Bodenelektrode wird durch den Einsatz und die Anordnung des Flanschrohres erreicht. Das Flanschrohr dient u. a. dazu, auf die Elektrode einwirkende Kräfte aus dem Verschleißteil in den Gefäßboden abzuleiten. Solche Kräfte treten u. a. beim Schrottchargieren oder durch den ferrostatischen Druck auf, den die Stahlschmelze ausübt. Der Kupferteil und die Haltevorrichtung zur Medienversorgung werden somit keiner mechanischen Belastung unterworfen. Durch diese Konstruktion ist es möglich, gut leitendes, relativ weiches Kupfer einzusetzen. Durch das Ableiten von auftretenden Kräften mittels des Flanschrohres in den Gefäßboden wird zudem vermieden, daß die Kühlwasser- und Stromversorgung beansprucht und eventuell beschädigt wird.

Zur wirkungsvollen Kühlung der Elektrode wird Schwallwasser benutzt. Während bei einer Zwangskühlung in Form von durchströmten Kanälen oder Rohren auf Grund eines beschränkten Wärmeüberganges ein erheblicher Aufwand betrieben werden muß, um durch Vergrößerung der Wärmetauschflächen und/oder der Kühlwassergeschwindigkeit eine ausreichende Kühlwirkung zu erzielen, ist die Schwallwasserkühlung bei einfacher Kühlkammergeometrie realisierbar. Bei einer großen Anzahl kleiner Kühlwasserkanäle besteht nämlich die Gefahr, daß es aufgrund besonderer lokaler Strömungsverhältnisse, z. B. an Schweißnähten, Kanalbiegungen usw. zur Dampfblasenbildung kommt. Diese Dampfblasen können bei bestimmter Größe und Lage die Wirkung eines Absperrventils haben mit der Folge, daß die Strömung des Kühlmediums behindert wird und ggfs. völlig zusammenbricht. Vergleichbare negative Auswirkungen sind bei dem vorliegenden Konzept der Schwallwasserkühlung mit Sicherheit auszuschließen. Das Kühlmittel wird bei der Schwallwasserkühlung über kopfendig offene Rohrleitungen, die zwecks Erhöhung der Austrittsgeschwindigkeit mit Düsen versehen sein können, zugeführt. Das Kühlwasser prallt gegen die Stirnwand der in die Elektrode eingebrachten Sackbohrungen und ist dadurch in der Lage, erhebliche Wärmemengen aufzunehmen. Ein Ansammeln von Dampfblasen ist bei der hohen kinetischen Energie des aufprallenden Wassers nicht möglich. Das Kühlwasser strömt anschließend über die im Vergleich zur Zufuhrleitung erheblich größeren Abführleitung aus der Elektrode heraus. Das Abströmen kann durch Absaugen des Kühlmittels erhöht werden. Zudem würden eventuell entstandene Dampfblasen durch die Absaugung von der Kühlfläche entfernt werden.

In besonderer Weise eignen sich zum Absaugen Scheibenpumpen, da diese unempfindlich gegen das Auftreten von Luftblasen im flüssigen Kühlmittel sind.

Die Kühlwirkung der Intensivwasserkühlung mittels Schwallwasser wirkt indirekt über den die Wärme gut leitenden Kupferkern bis dicht unterhalb der Schmelzfront ein. Hierdurch gelingt es, die Schmelzfront weit vom Gefäßboden entfernt zu halten. Neben der Erhöhung der Betriebssicherheit wird hierdurch auch der Verschleiß der Elektrode und des umgebenden Mauerwerkes minimiert.

Durch Anordnung und konstruktive Ausgestaltung der Kühlkanäle sowie durch Steuerung der Kühlflüssigkeitsmengen und -geschwindigkeit können die Kühlwirkungszonen gezielt beeinflußt werden. Durch die Anbringung von Thermoelementen in der Elektrode kann die Lage der Schmelzfront sicher überwacht werden.

Ein Beispiel der Erfindung wird in der beiliegenden Zeichnung dargelegt. Es zeigt:
- Fig. 1: einen Schnitt durch die Bodenelektrode und
- Fig. 2: eine Draufsicht.

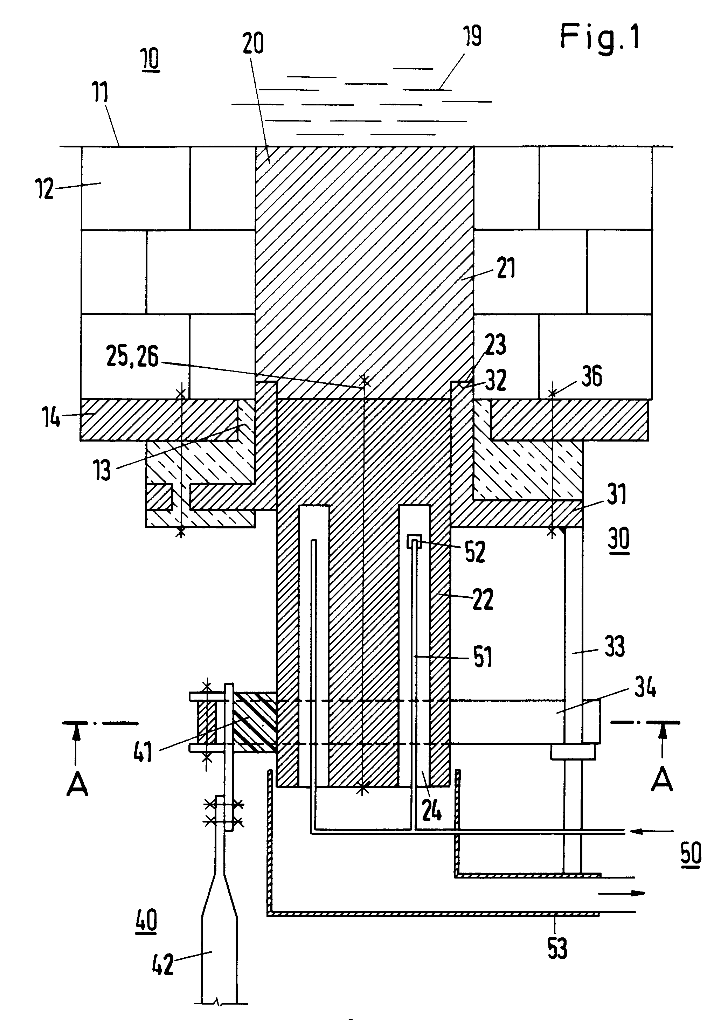

Figur 1 zeigt dabei einen Ausschnitt des metallurgischen Gefäßes 10 mit dem Gefäßboden 11, der eine Feuerfestauskleidung 12 sowie den Mantel 14 aufweist. Innerhalb des metallurgischen Gefäßbodens ist die Schmelze 19 angedeutet.

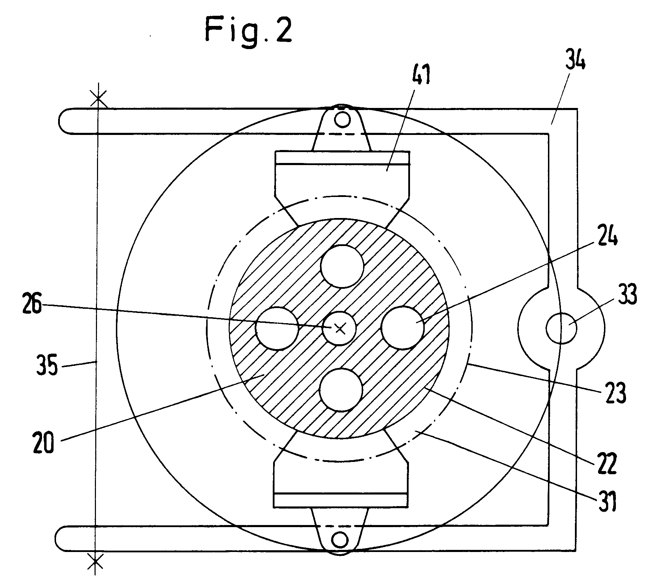

Am Mantel 14 ist durch eine Isolierung 13 getrennt eine Halteeinrichtung 30 mittels Schrauben 36 lösbar befestigt. Die Halteinrichtung 30 besteht dabei aus einem Flanschrohr 31, an dem vom Gefäßboden wegweisend ein Halteelement 33 angeordnet ist, an dem ein Spannring 34 (siehe dazu Figur 2) und die Kühlmedienleitungen, und zwar die Rohrzuleitung 51 und der Abfluß 53 befestigt sind. An dem Spannring 34 sind die Stromführungsbauteile 40, im wesentlichen bestehend aus der Kontaktbacke 41 und dem Stromrohr 42, befestigt.

Das Flanschrohr 31 weist in seinem koaxial zur Elektrodenmitte angeordneten rohrförmigen Teil kopfendig eine Stirnfläche 32 auf.

In das Flanschrohr 31 ist eine Elektrode 20 steckbar. Diese Elektrode 20 weist einen zylindrischen Stab 21 und mit diesem verbindbar eine Hülse 22 auf. Der zylindrische Stab 21 besitzt dabei einen Absatz 23 in einer der Stirnfläche des Rohres 32 entsprechenden Größe.

Die Hülse 22 ist über Verbindungsmittel 25, im dargelegten Beispiel durch eine Spannschraube 26, mit dem Stub 21 verbindbar.

Die Hülse 22 besitzt vom zylindrischen Stab wegweisend Bohrungen 24, in die Rohrleitungen 51 einbringbar sind. Der Durchmesser der Bohrungen ist mindestens vier mal so groß ist wie der Durchmesser der Rohrleitung 51. Am Kopfende der Rohrleitungen 51, die der Wasserzuführung dienen, können Düsen 52 angebracht sein.

Vorgesehen sind (in Figur 1 nicht dargestellt) die Anordnung von Thermoelementen im Verschleißteil (zylindrischer Stab 21) sowie die Anbringung einer Absaugpumpe an dem Abfluß 53.

Die Figur 2 zeigt die Ansicht A-A der Bodenelektrode. Die Hülse 22 der Elektrode 20 weist dabei Bohrungen 24 auf. Die Verspannung der beiden Elektrodenteile mittels der Spannschraube 26 ist schematisch dargestellt. Die Hülse 22 ist durch das Flanschrohr 31 gesteckt, wobei der Absatz 23 der Elektrode 20 angedeutet ist.

An dem Halteelement 33 ist der Spannring 34 befestigt. Der Spannring 34 besitzt eine gabelförmige Ausgestaltung und ist durch Spannelemente 35 verspannbar. An dem Spannring 34 sind die Kontaktbacken 41 angeordnet, die mittels der Spannelemente 36 über den Spannring 34 gegen die Hülse 22 preßbar sind.

## Patentansprüche

1. Metallurgisches Gefäß, insbesondere Ofengefäß eines Gleichstromlichtbogenofens mit mindestens einer am Mantel des Gefäßbodens befestigten metallischen Elektrode, die einenends die Ofenwand durchdringend im Gefäß befindliche Schmelze berührt und anderenends an elektrische und kühlfluide Versorgungsquellen anschließbar ist, wobei
die Elektrode (20) aus zwei miteinander verbindbaren Stäben (21, 22) besteht, dadurch gekennzeichnet,
der gesamte aus dem Ofen herausragende Teil der Elektrode (20) mit einem Kühlmittel beaufschlagbar ist,
daß der der Schmelze zugewandte Stab (21) einen den Durchmesser vergrößernden Absatz (23) aufweist,
daß am Mantel (14) des metallurgischen Gefäßes (10) ein Flanschrohr (31) anschraubbar ist, das koaxial zur Elektrodenmitte angeordnet ist, wobei die Stirnfläche (32) des Rohres der Ringfläche des Absatzes (23) entspricht und gegen diese lehnbar ist, und
daß am Flanschrohr (31) mindestens ein Halteelement (33) vorgesehen ist, an dem das Stromführungsbauteil (40) und die Kühlmittelzu- (51) und Abführleitungen (53) befestigt sind.

2. Gefäß nach Anspruch 1,
dadurch gekennzeichnet,
daß in den Stäben (22) mehrere zur Elektrodenmitte konzentrisch angeordnete Bohrungen (24) vorgesehen sind, in die das Kühlmittelzuführelement (51) einbringbar ist.

3. Gefäß nach Anspruch 2,
dadurch gekennzeichnet,
daß das Kühlmittelzuführelement (51) eine kopfendig offene Rohrleitung ist.

4. Gefäß nach Anspruch 3,
dadurch gekennzeichnet,
daß die Rohrleitung (51) Düsen (52) zur Erhöhung der Austrittsgeschwindigkeit des Kühlmittels aufweist.

5. Gefäß nach den Ansprüchen 3 oder 4,
dadurch gekennzeichnet,
daß das Verhältnis der Durchmesser von Rohrleitung (51) und Bohrung (24) größer 1 : 4 ist.

6. Gefäß nach Anspruch 1,
dadurch gekennzeichnet,
daß die Bohrungen (24) in einen offenen Kühlmittelabfluß (53) münden.

7. Gefäß nach Anspruch 6,
dadurch gekennzeichnet,
daß an den Kühlmittelabfluß (53) Absaugpumpen (70) angeordnet sind.

8. Gefäß nach Anspruch 7,
dadurch gekennzeichnet,
daß die Absaugpumpen (70) Scheibenpumpen sind.

9. Gefäß nach Anspruch 1,
dadurch gekennzeichnet,
daß zwischen dem Mantel (14) und dem Flanschrohr (31) eine Isolierung (13) vorgesehen ist.

10. Gefäß nach Anspruch 1,
dadurch gekennzeichnet,
daß das Halteelement (33) für die Stromführungsbauteile (40) einen Spannring (34) aufweist, an dem Kontaktbacken (41) angeordnet sind.

11. Gefäß nach Anspruch 10,
dadurch gekennzeichnet,
daß der Spannring (34) Spannelemente (35) zum Anpressen der Kontaktbacken (41) an die Hülse (22) aufweist.

12. Gefäß nach Anspruch 11,
dadurch gekennzeichnet,
daß die Spannelemente (35) mechanisch, pneumatisch oder hydraulisch betätigbar sind.

13. Gefäß nach Anspruch 1,
dadurch gekennzeichnet,
daß Mittel (25) vorgesehen sind, die den Stab (21) und den hülsenförmigen Stab (22) der Elektrode (20) weder den Wärme- noch den elektrischen Stromübergang behindernd miteinander verbindet.

14. Gefäß nach Anspruch 13,
dadurch gekennzeichnet,
daß die Mittel (25) Spannschrauben (26) sind, die in den Stab (21) hineinragend und den Stab (22) durchdringend die sich berührenden Flächen der Stäbe (21, 22) kraftschlüssig aneinanderpressen.

15. Gefäß nach Anspruch 13,
dadurch gekennzeichne,
daß die Mittel (25) Schweiß- oder Lötmittel sind, die die Stäbe (21, 22) innig miteinander verbinden.

16. Gefäß nach einem der o. g. Ansprüche,
dadurch gekennzeichnet,
daß den Stab (22) durchdringend in den Stab (21) ragende Thermoelemente (60) vorgesehen sind.

## Claims

1. A metallurgical vessel, in particular the furnace vessel of a direct-current arc furnace having at least one metal electrode attached to the casing of the vessel base, which electrode at one end, penetrating through the furnace wall, contacts a melt located in the vessel and at the other end can be connected to electric and cooling-fluid supply sources, the electrode (20) consisting of two rods (21, 22) which can be connected together, characterised in that the entire portion of the electrode (20) which projects out of the furnace can be acted upon by a coolant, that the rod (21) facing the melt has a shoulder (23) which increases the diameter, that a flanged pipe (31) can be screwed on to the casing (14) of the metallurgical vessel (10), which pipe is arranged coaxially to the centre of the electrode, the end face (32) of the pipe corresponding to the annular face of the shoulder (23) and being able to be placed against the latter, and that at least one holding element (33) is provided on the flanged pipe (31), to which holding element the power-supply component (40) and the coolant feed (51) and drainage lines (53) are attached.

2. A vessel according to Claim 1, characterised in that a plurality of bores (24) arranged concentrically to the centre of the electrode are provided in the rods (22), into which bores the coolant feed element (51) can be introduced.

3. A vessel according to Claim 2, characterised in that the coolant feed element (51) is a pipe which is open at the head end.

4. A vessel according to Claim 3, characterised in that the pipe (51) has nozzles (52) for increasing the emergence rate of the coolant.

5. A vessel according to Claims 3 or 4, characterised in that the ratio of the diameters of the pipe (51) and bore (24) is greater than 1 : 4.

6. A vessel according to Claim 1, characterised in that the bores (24) open into an open coolant outlet (53).

7. A vessel according to Claim 6, characterised in that suction pumps (70) are located on the coolant outlet (53).

8. A vessel according to Claim 7, characterised in that the suction pumps (70) are disc pumps.

9. A vessel according to Claim 1, characterised in that insulation (13) is provided between the casing (14) and the flanged pipe (31).

10. A vessel according to Claim 1, characterised in that the holding element (33) for the current-carrying components (40) has a clamping ring (34) on which contact jaws (41) are located.

11. A vessel according to Claim 10, characterised in that the clamping ring (34) has clamping elements (35) for pressing the contact jaws (41) against the sleeve (22).

12. A vessel according to Claim 11, characterised in that the clamping elements (35) are mechanically, pneumatically or hydraulically operable.

13. A vessel according to Claim 1, characterised in that means (25) are provided which connect the rod (21) and the sleeve-shaped rod (22) of the electrode (20) together without hindering either the heat transfer or the electric current conduction.

14. A vessel according to Claim 13, characterised in that the means (25) are clamping screws (26) which project into the rod (21) and penetrate through the rod (22) and press the contacting surfaces of the rods (21, 22) non-positively against one another.

15. A vessel according to Claim 13, characterised in that the means (25) are welding agent or solder which join the rods (21, 22) intimately together.

16. A vessel according to one of the above Claims, characterised in that thermoelements (60) which project into the rod (21), penetrating the rod (22), are provided.

## Revendications

1. Récipient métallurgique, en particulier récipient d'un four à arc électrique à courant continu, comportant au moins une électrode métallique fixée sur l'enveloppe du fond du récipient, qui, à une extrémité, est au contact du bain de fusion se trouvant dans le récipient, en traversant la paroi du four et, à l'autre extrémité, pour être raccordée à des sources d'alimentation électrique et en fluide de refroidissement, l'électrode (20) étant constituée de deux barres (21,22) pouvant être reliées ensemble,
caractérisé en ce que toute la partie, faisant saillie du four, de l'électrode (20) peut être alimentée par un fluide de refroidissement, en ce que la barre (21), en regard du bain de fusion, présente un décrochement (23) agrandissant le diamètre, en ce que, sur l'enveloppe (14) du récipient métallurgique (10), il peut être vissé un tube (31) qui est agencé coaxialment au centre de l'électrode, la face frontale (32) du tube correspondant à la surface annulaire du décrochement (23) et pouvant s'appuyer contre celle-ci, et en ce que, sur le tube (31), il est prévu au moins un élément de maintien (33) sur lequel sont fixés la pièce d'amenée du courant (40) et les conduits d'amenée (51) et d'évacuation (53) du fluide de refroidissement.

2. Récipient selon la revendication 1,
caractérisé en ce que, dans la barre (22), il est prévu plusieurs perçages (24) agencés de façon concentrique au centre de l'électrode, dans lesquels l'élément d'amenée (51) du fluide de refroidissement peut étre agencé.

3. Récipient selon la revendication 2,
caractérisé en ce que l'élément d'amenée (51) du fluide de refroidissement est un tube ouvert à l'extrémité de tête.

4. Récipient selon la revendication 3,
caractérisé en ce que le tube (51) présente des buses (52) pour augmenter la vitesse de sortie du fluide de refroidissement.

5. Récipient selon les revendications 3 ou 4,
caractérisé en ce que le rapport du diamètre du tube (51) au perçage (24) est supérieur à 1:4.

6. Récipient selon la revendication 1,
caractérisé en ce que les perçages (24) débouchent dans une sortie ouverte (53) du fluide de refroidissement.

7. Récipient selon la revendication 6,
caractérisé en ce que des pompes d'aspiration (70) sont agencées à la sortie (53) du fluide de refroidissement.

8. Récipient selon la revendication 7,
caractérisé en ce que les pompes d'aspiration (70) sont des pompes à plateaux.

9. Récipient selon la revendication 1,
caractérisé en ce que, entre l'enveloppe (14) et le tube (31), il est prévu une isolation (13).

10. Récipient selon la revendication 1,
caractérisé en ce que l'élément de maintien (33) pour les pièces d'amenée du courant (40) présente une bague de serrage (34) sur laquelle sont agencées des mâchoires de contact (41).

11. Récipient selon la revendication 10,
caractérisé en ce que la bague de serrage (34) présente des éléments de serrage (35) pour presser les mâchoires de contact (41) sur le manchon (22).

12. Récipient selon la revendication 11,
caractérisé en ce que les éléments de serrage (35) peuvent être actionnées de façon mécanique, pneumatique ou hydraulique.

13. Récipient selon la revendication 1,
caractérisé en ce qu'il est prévu des moyens (25) qui relient la barre (21) et la barre (22), en forme de manchon, de l'électrode (20) ensemble, en n'empêchant ni le transfert de chaleur, ni le transfert de courant électrique.

14. Récipient selon la revendication 13,
caractérisé en ce que les moyens (25) sont des vis de serrage (26) qui pressent l'une contre l'autre, sous l'action d'une force, les surfaces en contact des barres (21,22) en pénétrant dans la barre (21) et en traversant la barre (22).

15. Récipient selon la revendication 13,
caractérisé en ce que les moyens (25) sont des moyens de soudure ou de brasure qui relient intimement ensemble les barres (21,22).

16. Récipient selon une des revendications précédentes,
caractérisé en ce que des thermocouples (60) pénétrant dans la barre (21) et traversant la barre (22) sont prévus.
